# FASCICULE DE BREVET EUROPEEN

(11) **EP 2 206 177 B1**
(45) Date de publication et mention de la délivrance du brevet: **17.08.2011**
(21) Numéro de dépôt: 08837545.6
(22) Date de dépôt: 12.09.2008
(51) Int. Cl.: H01M 2/12

(54) **DISPOSITIF DE DEGAZAGE D'UNE BATTERIE DE VEHICULE AUTOMOBILE**
VORRICHTUNG ZUR ENTGASUNG EINER FAHRZEUGBATTERIE
DEVICE FOR DEGASSING THE BATTERY OF AN AUTOMOBILE

(30) Priorité: 02.10.2007 FR 0757996
(43) Date de publication de la demande: 14.07.2010
(73) Titulaire: Renault S.A.S., 92100 Boulogne-Billancourt (FR)
(72) Inventeur: TRENTIN, Stephane, F-91170 Viry-chatillon (FR)
(86) Numéro de dépôt international: PCT/FR2008/051638
(87) Numéro de publication internationale: WO 2009/047424

(56) Documents cités:
- EP-A- 1 233 463
- EP-A- 1 291 936
- US-A- 4 618 544

## Description

L'invention concerne un dispositif de dégazage de batterie de véhicule automobile.

Elle se rapporte plus précisément à une batterie disposée sous la caisse du véhicule. En effet, afin de diminuer l'encombrement de l'espace réservé au moteur, la batterie peut être disposée sous la caisse du véhicule, par exemple sous le siège du conducteur.

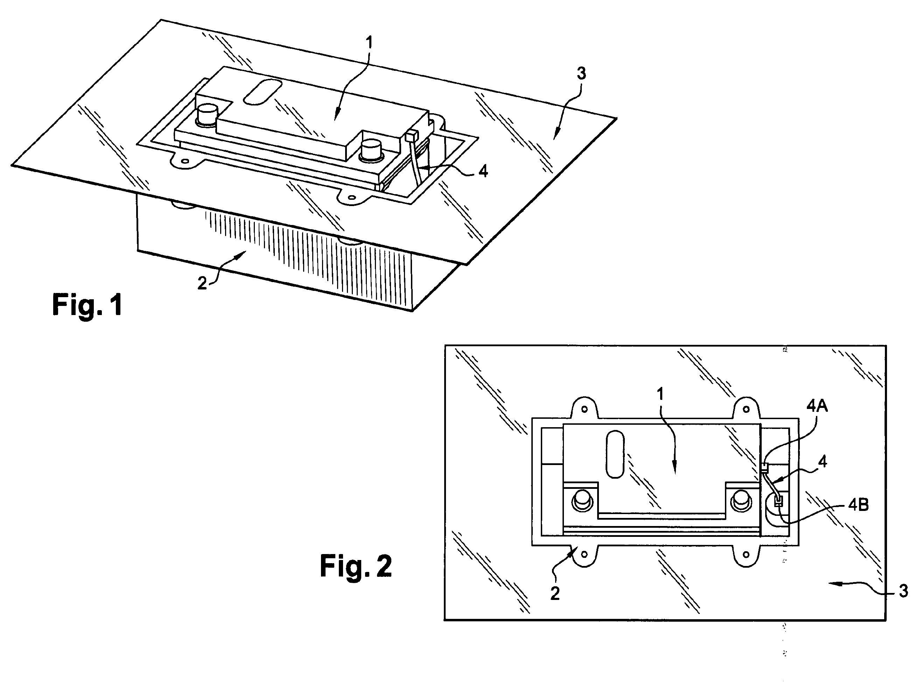

La figure 1 représente une telle batterie connue.

La batterie 1 est alors disposée dans un bac 2 fixé au plancher 3 du véhicule et sous ce dernier. Elle est équipée d'un tuyau de dégazage 4 connecté à la partie haute de la batterie et destiné à l'évacuation d'acide liquide ou gazeux, en cas de surchauffe. L'extrémité libre de ce tuyau est fixée dans un orifice agencé dans le fond du bas 2, afin d'évacuer les gouttes d'acide ou le gaz acide sous le véhicule.

Ce type de dispositif pose le problème technique suivant.

Suite à l'agencement du bac, l'orifice d'évacuation est disposé à un niveau situé sous le niveau du plancher. Or compte tenu des contraintes dites de passage à gué, à savoir la possibilité pour le véhicule de circuler dans un endroit présentant une certaine hauteur d'eau, il se peut qu'une quantité d'eau, lors d'un passage dans un tel endroit, passe dans l'orifice d'évacuation et s'introduise dans la batterie, ce qui est très préjudiciable à son bon fonctionnement.

L'invention résout ce problème et, pour ce faire, elle propose un dispositif de dégazage d'une batterie de véhicule automobile comportant un tuyau de dégazage dont une première extrémité disposée en partie haute de la batterie et extérieurement à cette dernière est connectée à l'intérieur de la batterie et dont la seconde extrémité disposée à proximité de la partie basse de la batterie et extérieurement à cette dernière est connectée à un orifice ouvert sur un espace d'évacuation, caractérisé ladite seconde extrémité est connectée audit espace d'évacuation par l'intermédiaire d'un clapet anti-retour, assurant uniquement le passage de ladite première extrémité vers l'espace d'évacuation.

Selon un mode de réalisation préféré de l'invention, ledit clapet anti-retour est constitué d'un élément flottant disposé dans ledit orifice.

Ledit orifice est avantageusement d'axe longitudinal sensiblement vertical.

Ledit orifice peut comporter un tronçon conique auquel est connectée ladite seconde extrémité du tuyau et en ce que ledit élément flottant est au moins partiellement de forme conique complémentaire.

Ledit orifice peut comporter également un tronçon cylindrique relié audit espace d'évacuation et en ce que ledit élément flottant est au moins partiellement de forme cylindrique de diamètre inférieur au diamètre dudit tronçon cylindrique.

Selon une première variante de réalisation, ledit tronçon cylindrique peut être fermé par une paroi percée d'au moins un trou et en ce que ledit élément flottant comporte au moins deux brides sensiblement axiales destinées à venir en appui sur ladite paroi percée.

Selon une seconde variante de réalisation, ledit tronçon cylindrique comporte au moins deux clips radiaux de largeur supérieure à la différence des diamètres dudit tronçon cylindrique et de l'élément flottant.

L'invention concerne également un module pour la réalisation d'un dispositif de dégazage d'une batterie de véhicule automobile tel que précisé ci-dessus, caractérisé en ce que ledit orifice et le dit clapet anti-retour sont agencés dans un bloc de montage.

L'invention est décrite ci-après plus en détail à l'aide de figures ne représentant que des modes de réalisation préférés de l'invention.
La figure 1 déjà précisée est une vue en perspective d'une batterie avec son dispositif de dégazage connu.
La figure 2 est une vue de dessus d'une batterie équipée d'un dispositif de dégazage conforme à l'invention.
La figure 3 est une vue en perspective, et en coupe d'une batterie équipée d'un dispositif de dégazage conforme à l'invention, selon un premier mode de réalisation.
La figure 4 est une vue en perspective d'un clapet flottant, partie d'un d'une batterie équipée d'un dispositif de dégazage conforme à l'invention, selon ce premier mode de réalisation.
La figure 5 est une vue en perspective et en coupe d'un dispositif de dégazage conforme à l'invention, selon un second mode de réalisation.
La figure 6 est une vue en perspective et en coupe d'un module conforme à l'invention.
Les figures 7 et 8 illustrent le fonctionnement du dispositif de dégazage conforme à l'invention, selon ce premier mode de réalisation.

Comme illustré sur la figure 2, le tuyau de dégazage 4 est fixé par l'intermédiaire d'un premier embout clippé 4A solidaire de sa première extrémité, dans un alésage correspondant, sur la partie haute de la batterie et extérieurement à cette dernière et, par l'intermédiaire d'un second embout clippé 4B solidaire de sa seconde extrémité dans un alésage correspondant, dans le fond du bac 2 de réception de la batterie 1, à proximité de la partie basse de la batterie et extérieurement à cette dernière.

Cette seconde extrémité est connectée à l'espace d'évacuation qui est ici le dessous de la caisse du véhicule, par l'intermédiaire d'un clapet anti-retour, assurant uniquement le passage de la première extrémité vers l'espace d'évacuation, via un orifice d'évacuation agencé dans le fond du bac 2.

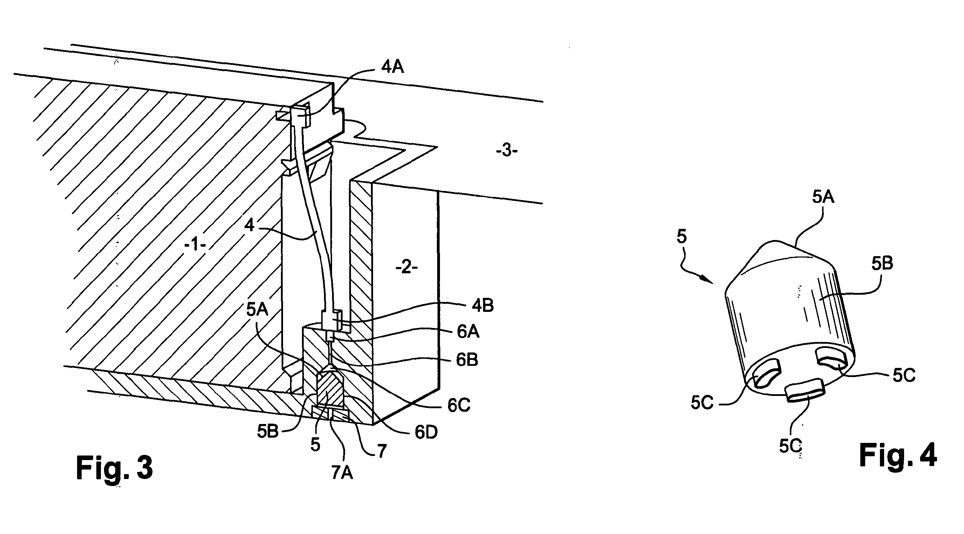

Un premier mode de réalisation est représenté sur les figures 3 et 4.

Le clapet anti-retour est constitué d'un élément flottant 5, avantageusement en matière plastique, disposé dans l'orifice d'évacuation d'axe longitudinal sensiblement vertical.

Cet orifice comporte de haut en bas, un tronçon cylindrique 6A de moyen diamètre dans lequel est emboîté le raccord clippé 4B solidaire de la seconde extrémité du tuyau 4, puis un tronçon cylindrique 6B de plus petit diamètre débouchant sur un tronçon conique 6C s'élargissant vers le bas débouchant lui-même sur un dernier tronçon cylindrique 6D.

L'élément flottant présente une partie haute 5A de forme conique complémentaire et une partie basse de forme cylindrique 5B de diamètre inférieur au diamètre du tronçon cylindrique 6D de l'orifice.

Le tronçon cylindrique 6D est fermée par une paroi percée 7 d'au moins un trou, ici un seul trou central 7A, et l'élément flottant 5 comporte au moins deux brides, ici trois brides 5C, sensiblement axiales destinées à venir en appui sur la paroi percée.

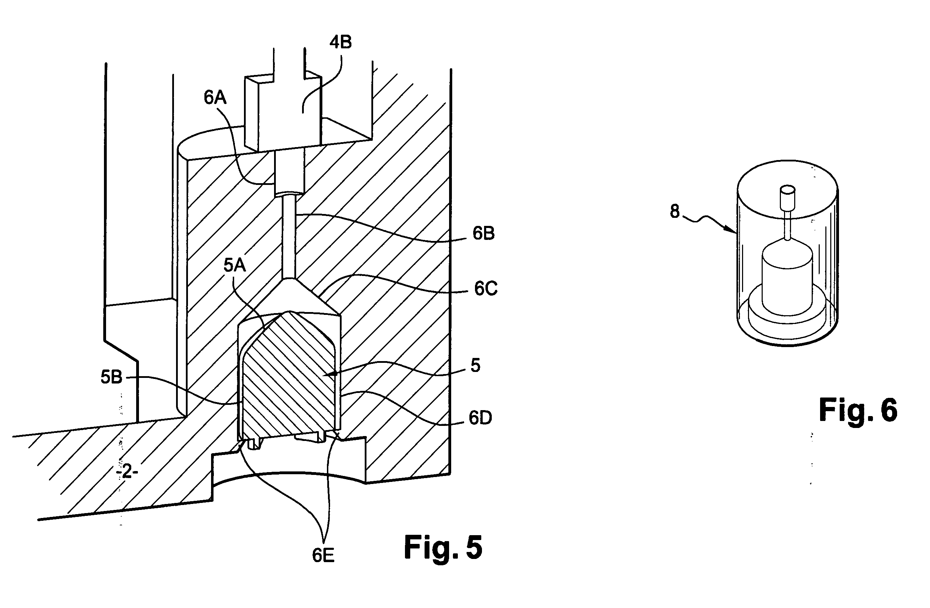

Un second mode de réalisation est représenté sur la figure 5.

Le clapet anti-retour est constitué d'un élément flottant 5, avantageusement en matière plastique, disposé dans l'orifice d'évacuation d'axe longitudinal sensiblement vertical.

Cet orifice comporte de haut en bas, un tronçon cylindrique 6A de moyen diamètre dans lequel est emboîté le raccord clippé 4B solidaire de la seconde extrémité du tuyau 4, puis un tronçon cylindrique 6B de plus petit diamètre débouchant sur un tronçon conique 6C s'élargissant vers le bas débouchant lui-même sur un dernier tronçon cylindrique 6D.

L'élément flottant présente une partie haute 5A de forme conique complémentaire et une partie basse de forme cylindrique 5B de diamètre inférieur au diamètre du tronçon cylindrique 6D de l'orifice.

Le tronçon cylindrique 6D comporte à son extrémité inférieure au moins deux clips radiaux 6E de largeur supérieure à la différence des diamètres de ce tronçon cylindrique et de l'élément flottant 5.

Afin de faciliter le montage dans le bac 2 de réception de la batterie et facilité la gestion des pièces détachées, orifice et clapet peuvent être intégrés à un bloc de montage avantageusement cylindrique, pour former un module tel que représenter sur la figure 6.

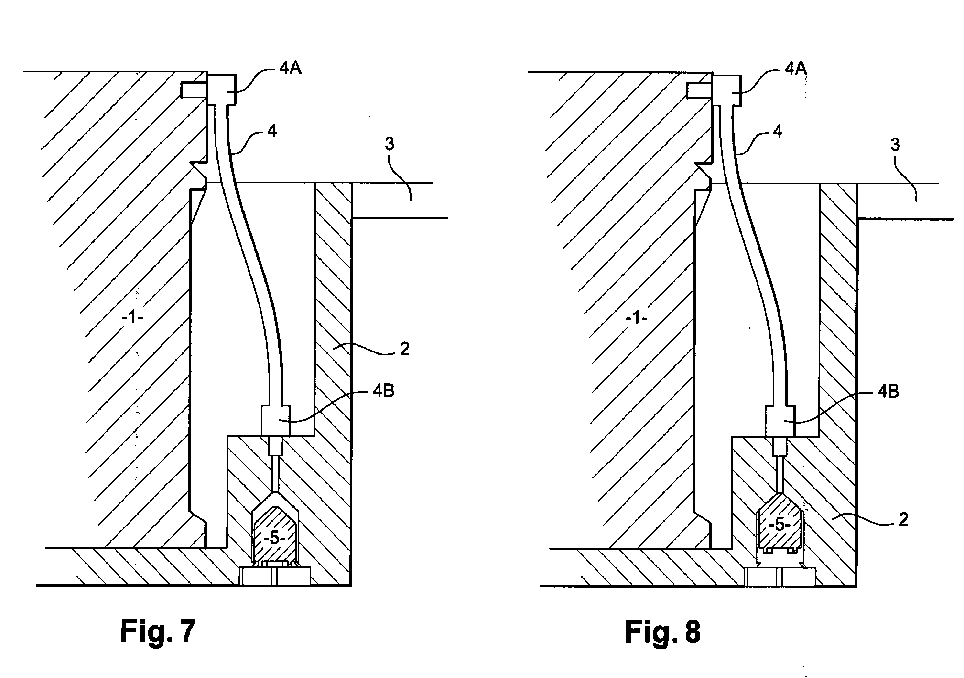

Les figures 7 et 8 illustrent le fonctionnement du dispositif de dégazage conforme à l'invention.

Comme illustré sur la figure 7, lorsque le véhicule est en stationnement ou roule sur un emplacement sec, le clapet flottant 5 est en appui par gravité sur la paroi percée 7 selon la première variante de réalisation, ou sur les clips 6E selon la seconde variante de réalisation. En cas de surchauffe de la batterie, l'acide gazeux ou liquide peut s'évacuer hors de la batterie, via le tuyau de dégazage 4 et l'orifice d'évacuation.

Selon la première variante de réalisation, l'acide s'écoule entre le clapet 5 et la paroi de l'orifice, puis sous le clapet 5 par le trou de la paroi percée 7.

Selon la seconde variante de réalisation, l'acide s'écoule entre le clapet 5 et la paroi de l'orifice, puis sous le clapet 5 entre les clips 6E.

Comme illustré sur la figure 8, lorsque le véhicule est en stationnement ou roule sur un emplacement présentant une certaine hauteur d'eau, le clapet flottant 5 flotte et vient en contact étanche par sa partie conique 5A contre le tronçon conique 6C. L'orifice d'évacuation est ainsi fermé de façon étanche par le clapet anti-retour formé par cet agencement de clapet flottant 5 et l'eau ne peut pas pénétrer dans le tuyau de dégazage 4.

## Revendications

1. Dispositif de dégazage d'une batterie (1) de véhicule automobile comportant un tuyau de dégazage (4) dont une première extrémité disposée en partie haute de la batterie et extérieurement à cette dernière est connectée à l'intérieur de la batterie et dont la seconde extrémité est connectée à un orifice ouvert sur un espace d'évacuation, ladite seconde extrémité étant connectée audit espace d'évacuation par l'intermédiaire d'un clapet anti-retour, assurant uniquement le passage de ladite première extrémité vers l'espace d'évacuation, **caractérisé en ce que** ladite seconde extrémité est disposée à proximité de la partie basse de la batterie et extérieurement à cette dernière, et **en ce que** ledit clapet anti-retour comporte un élément flottant (5) maintenu dans ledit orifice et apte à fermer ledit orifice.

2. Dispositif selon la revendication précédente, **caractérisé en ce que** ledit orifice est d'axe longitudinal sensiblement vertical.

3. Dispositif selon la revendication précédente, **caractérisé en ce que** ledit orifice comporte un tronçon conique (6C) auquel est connectée ladite seconde extrémité du tuyau et **en ce que** ledit élément flottant (5) est au moins partiellement de forme conique complémentaire (5A).

4. Dispositif selon la revendication 3 ou 4, **caractérisé en ce que** ledit orifice comporte un tronçon cylindrique (6D) relié audit espace d'évacuation et **en ce que** ledit élément flottant (5) est au moins partiellement de forme cylindrique (5B) de diamètre inférieur au diamètre audit tronçon cylindrique.

5. Dispositif selon la revendication précédente, **caractérisé en ce que** ledit tronçon cylindrique (6D) est fermée par une paroi percée (7) d'au moins un trou et **en ce que** ledit élément flottant (5) comporte au moins deux brides (5C) sensiblement axiales destinées à venir en appui sur ladite paroi percée (7).

6. Dispositif selon la revendication 5, **caractérisé en ce que** ledit tronçon cylindrique (6D) comporte au moins deux clips radiaux (6E) de largeur supérieure à la différence des diamètres dudit tronçon cylindrique (6D) et de l'élément flottant (5).

7. Module (8) pour la réalisation d'un dispositif de dégazage d'une batterie (1) de véhicule automobile selon l'une des revendications précédentes, **caractérisé en ce qu'**il comporte ledit orifice et le dit clapet anti-retour agencés dans un bloc de montage.

## Claims

1. Device for degassing a battery (1) of a motor vehicle, comprising a degassing pipe (4) of which a first end, positioned at the top part of the battery and externally thereto, is connected to the inside of the battery and of which the second end is connected to an orifice opening into a discharge space, said second end being connected to said discharge space via a nonreturn valve, allowing flow only from said first end towards the discharge space, **characterized in that** said second end is positioned near the bottom part of the battery and externally thereto, and **in that** said nonreturn valve comprises a floating element (5) that is held in said orifice and capable of closing off said orifice.

2. Device according to the preceding claim, **characterized in that** said orifice has a substantially vertical longitudinal axis.

3. Device according to the preceding claim, **characterized in that** said orifice comprises a conical portion (6C) to which said second end of the pipe is connected, and **in that** said floating element (5) is at least partially of complementary conical shape (5A).

4. Device according to Claim 3, **characterized in that** said orifice comprises a cylindrical portion (6D) connected to said discharge space, and **in that** said floating element (5) is at least partially of cylindrical shape (5B) of a diameter smaller than the diameter of said cylindrical portion.

5. Device according to the preceding claim, **characterized in that** said cylindrical portion (6D) is closed by a pierced wall (7) pierced with at least one hole, and **in that** said floating element (5) comprises at least two substantially axial flanges (5C) intended to press against said pierced wall (7).

6. Device according to Claim 4, **characterized in that** said cylindrical portion (6D) comprises at least two radial clips (6E) of a width greater than the difference in diameters of said cylindrical portion (6D) and of the floating element (5).

7. Module (8) for creating a device for degassing a battery (1) of a motor vehicle according to one of the preceding claims, **characterized in that** it comprises said orifice and said nonreturn valve both arranged in a mounting unit.

## Patentansprüche

1. Vorrichtung zum Entgasen einer Batterie (1) eines Kraftfahrzeugs, die ein Entgasungsrohr (4) besitzt, wovon ein erstes Ende, das im oberen Teil der Batterie und außerhalb dieser Letzteren angeordnet ist, mit dem Innenraum der Batterie verbunden ist und wovon das zweite Ende mit einer in einen Evakuierungsraum mündenden Öffnung verbunden ist, wobei das zweite Ende mit dem Evakuierungsraum über eine Rückschlagklappe verbunden ist, die ausschließlich den Durchgang von dem ersten Ende zu dem Evakuierungsraum gewährleistet, **dadurch gekennzeichnet, dass** das zweite Ende in der Nähe des unteren Teils der Batterie und außerhalb dieser Letzteren angeordnet ist und dass die Rückschlagklappe ein schwebendes Element (5) aufweist, das in der Öffnung gehalten wird und die Öffnung schließen kann.

2. Vorrichtung nach dem vorhergehenden Anspruch, **dadurch gekennzeichnet, dass** die Öffnung eine im Wesentlichen vertikale Längsachse besitzt.

3. Vorrichtung nach dem vorhergehenden Anspruch, **dadurch gekennzeichnet, dass** die Öffnung ein konisches Teilstück (6C) aufweist, mit dem das zweite Ende des Rohrs verbunden ist, und dass das schwebende Element (5) wenigstens teilweise eine komplementäre konische Form (5A) besitzt.

4. Vorrichtung nach Anspruch 3 oder 4, **dadurch gekennzeichnet, dass** die Öffnung ein zylindrisches Teilstück (6D) aufweist, das mit dem Evakuierungsraum verbunden ist, und dass das schwebende Element (5) wenigstens teilweise eine zylindrische Form (5B) mit einem Durchmesser, der kleiner als der Durchmesser des zylindrischen Teilstücks ist, hat.

5. Vorrichtung nach dem vorhergehenden Anspruch, **dadurch gekennzeichnet, dass** das zylindrische Teilstück (6D) durch eine durchlochte Wand (7) mit wenigstens einem Loch geschlossen ist und dass das schwebende Element (5) wenigstens zwei im Wesentlichen axiale Stege (5C) aufweist, die dazu bestimmt sind, an der durchlochten Wand (7) in Anschlag zu gelangen.

6. Vorrichtung nach Anspruch 4, **dadurch gekennzeichnet, dass** das zylindrische Teilstück (6D) wenigstens zwei radiale Rasten (6E) mit einer Breite, die größer als die Differenz der Durchmesser des zylindrischen Teilstücks (6D) und des schwebenden Elements (5) ist, aufweist.

7. Modul (8) für die Herstellung einer Vorrichtung zum Entgasen einer Batterie (1) für Kraftfahrzeuge nach einem der vorhergehenden Ansprüche, **dadurch gekennzeichnet, dass** es die Öffnung und die Rückschlagklappe, die in einem Montageblock angeordnet sind, enthält.
